# EUROPEAN PATENT APPLICATION

(11) **EP 2 278 293 A1**
(43) Date of publication of application: **26.01.2011**
(21) Application number: 10157321.0
(22) Date of filing: 23.03.2010
(51) Int. Cl.: G01L 9/06

(54) **Semiconductor pressure sensor and method of manufacturing the same**

(30) Priority: 23.07.2009 WO PCT/JP2009/063199
(71) Applicant: Ibiden Co., Ltd., Ogaki-shi, Gifu 503-8604 (JP)
(72) Inventor: Miyata, Fumishige, Gifu 501-0695 (JP); Inagaki, Shinji, Gifu 501-0695 (JP); Hamanaka, Senji, Gifu 501-0695 (JP)
(74) Representative: Siegert, Georg

(57) **Abstract**

A semiconductor pressure sensor includes a single crystal silicon substrate; a diaphragm formed in the single crystal silicon substrate by etching the single crystal silicon substrate from a back surface side thereof; four diaphragm side walls enclosing the diaphragm; and a bridge circuit formed on a surface of the single crystal silicon substrate, the bridge circuit including a lead conductor and a strain gauge resistor. The bridge circuit is configured to detect a pressure applied to the semiconductor pressure sensor based on a change in an output value of the bridge circuit that corresponds to an amount of flexure produced in the diaphragm by the pressure. The diaphragm has a plane orientation in a (110) plane and a parallelogram in-plane shape. The four diaphragm side walls have a plane orientation in a (111) plane and form two pairs of parallel and opposite surfaces.

## Description

### BACKGROUND OF THE INVENTION

### 1. Field of the Invention

The present invention generally relates to semiconductor pressure sensors utilizing the piezoresistive effect. Particularly, the invention relates to a semiconductor pressure sensor having a diaphragm formed in an opening portion of a semiconductor substrate, wherein a diaphragm gauge configured to output a detection signal corresponding to a flexure of the diaphragm is disposed on the diaphragm. The present invention also relates to a method of manufacturing such a semiconductor pressure sensor.

### 2. Description of the Related Art

Patent Document 1 discusses a semiconductor pressure sensor which may be used in an automobile engine control system, a barometer and the like. The semiconductor pressure sensor has a silicon (Si) substrate with a crystal orientation of a main-axis surface in a (100) plane, a Si substrate with a crystal orientation of a main-axis surface in a (110) plane, and an oxide film disposed between the Si substrates.

Such a structure of the semiconductor pressure sensor may be formed by selectively etching the Si substrate in the (110) plane from its back surface opposite the surface bonded to the Si substrate in the (100) plane, up to the bonding surface or its vicinity. Such a selective etching forms an opening portion in the back surface of the Si substrate of the (110) plane. The opening portion has side walls ("diaphragm side walls") and a thin-sheet region which may be formed at the center of the Si substrate of the (100) plane, the thin-sheet region forming a diaphragm. The Si substrate of the (110) plane is etched such that the diaphragm side walls are formed in a Si (111) plane perpendicular to the bonding surface. In this way, the diaphragm side walls are vertically formed in the Si (111) plane, so that the sensor chip area can be reduced.

However, Patent Document 1 does not specify the shape of the diaphragm or a mask used in photolithography for forming a required etch pattern on the substrate. As a result, when the Si substrate in the (110) plane is vertically etched, one pair of the diaphragm side walls that are parallel and opposite each other may be vertically formed while the other pair of the diaphragm side walls may be tapered. Such a tapered shape of the diaphragm side walls limits the degree to which the sensor chip area can be reduced, thereby preventing reduction in size of the pressure sensor.
Patent Document 1: Japanese Laid-Open Patent Application No. 7-153974

### SUMMARY OF THE INVENTION

In view of the foregoing, it is an object of the present invention to provide a semiconductor pressure sensor and a method of manufacturing the same in which all of the diaphragm side walls of an opening portion of a Si substrate can be in a plane perpendicular to the plane of the substrate.

In one aspect, the present invention provides a semiconductor pressure sensor that includes a single crystal silicon substrate; a diaphragm formed in the single crystal silicon substrate by etching the single crystal silicon substrate from a back surface side thereof; four diaphragm side walls enclosing the diaphragm; and a bridge circuit formed on a surface of the single crystal silicon substrate, the bridge circuit including a lead conductor and a strain gauge resistor. The bridge circuit is configured to detect a pressure applied to the semiconductor pressure sensor based on a change in an output value of the bridge circuit that corresponds to an amount of flexure produced in the diaphragm by the pressure. The diaphragm has a plane orientation in a (110) plane and a parallelogram in-plane shape. The four diaphragm side walls have a plane orientation in a (111) plane and form two pairs of parallel and opposite surfaces.

In the above embodiment of the present invention, all of the four diaphragm side walls of an opening portion of the single crystal silicon substrate in which the diaphragm is formed have the plane orientation in the (111) plane and form two pairs of parallel and opposite surfaces. In this case, all of the diaphragm side walls of the opening portion are formed in a plane perpendicular to the single crystal silicon substrate which is in the (110) plane. Thus, in accordance with the present embodiment, the sensor chip area can be greatly reduced, so that the size of the semiconductor pressure sensor can be reduced.

Preferably, the strain gauge resistor may include two center gauges disposed near the center of the diaphragm, and two side gauges each of which is disposed near the center of each of a pair of parallel and opposite sides of the diaphragm.

Preferably, the strain gauge resistor may include a wiring pattern formed on the diaphragm in a direction perpendicular to the pair of parallel and opposite sides of the diaphragm.

Preferably, the semiconductor pressure sensor may be used as a detecting device configured to detect a pressure in an exhaust channel of an internal combustion engine through which exhaust gas passes.

Preferably, the semiconductor pressure sensor may be used as a particulate matter detecting sensor configured to detect an amount of a particulate matter that accumulates in the filter, based on the pressure difference.

Preferably, the semiconductor pressure sensor may be used as a detecting device configured to detect a pressure difference between an upstream side and a downstream side of a filter installed in the exhaust channel.

In another aspect, the present invention provides a method of manufacturing a semiconductor pressure sensor. The method includes providing a single crystal silicon substrate having a plane orientation in the (110) plane; forming a bridge circuit on a surface of the single crystal silicon substrate, the bridge circuit including a lead conductor and a strain gauge resistor and configured to detect an amount of pressure applied to the semiconductor pressure sensor based on a change in an output value of the bridge circuit that corresponds to an amount of flexure of a diaphragm due to the pressure; and forming the diaphragm and four diaphragm side walls by etching the single crystal silicon substrate from a back surface side thereof, using a mask having an opening in the shape of a parallelogram whose sides are formed where the (110) plane of the single crystal silicon substrate intersects a (111) plane. The diaphragm has a plane orientation in the (110) plane and a parallelogram in-plane shape, the four diaphragm side walls having a plane orientation in the (111) plane and forming two pairs of parallel and opposite surfaces.

In this method, the diaphragm is formed in an opening portion of the single crystal silicon substrate by etching using the mask having an opening in the shape of a parallelogram whose sides are formed where the (110) plane of the single crystal silicon substrate intersects the (111) plane. In this case, all of the four diaphragm side walls of the opening portion are oriented in the (111) plane, forming two pairs of parallel and opposite surfaces. Thus, in accordance with the present embodiment, the sensor chip area can be greatly reduced, so that the size of the semiconductor pressure sensor can be reduced.

Preferably, in the above method of manufacturing a semiconductor pressure sensor, each of the vertexes of the parallelogram shape of the opening of the mask may be extended outwardly.

In accordance with an embodiment of the present invention, because all of the diaphragm side walls of the opening portion of the semiconductor substrate are oriented in the (111) plane, all of the diaphragm side walls can be formed in a plane perpendicular to the semiconductor substrate which is in the (110) plane.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:
FIG. 1A is a top plan view of a semiconductor pressure sensor according to a first embodiment of the present invention;
FIG. 1B is a cross section of the semiconductor pressure sensor according to the first embodiment;
FIGs. 2A through 2J illustrate various steps of a method of manufacturing the semiconductor pressure sensor of the first embodiment;
FIG. 3 illustrates an arrangement of gauges in the semiconductor pressure sensor of the first embodiment;
FIG. 4 illustrates the shape of a mask used in the manufacture of the semiconductor pressure sensor of the first embodiment;
FIG. 5A is a top plan view of a semiconductor pressure sensor according to a second embodiment of the present invention;
FIG. 5B is a cross section of the semiconductor pressure sensor of the second embodiment;
FIG. 6A illustrates a variation of the shape of the mask used in the manufacture of the semiconductor pressure sensor; and
FIG. 6B illustrates other variation of the shape of the mask used in the manufacture of the semiconductor pressure sensor.

### DETAILED DESCRIPTION OF THE PREFERRED EMBODIMENTS

Referring now to the drawings, wherein like reference numerals designate identical or corresponding parts throughout the several views, embodiments of the present invention are described.

### Embodiment 1

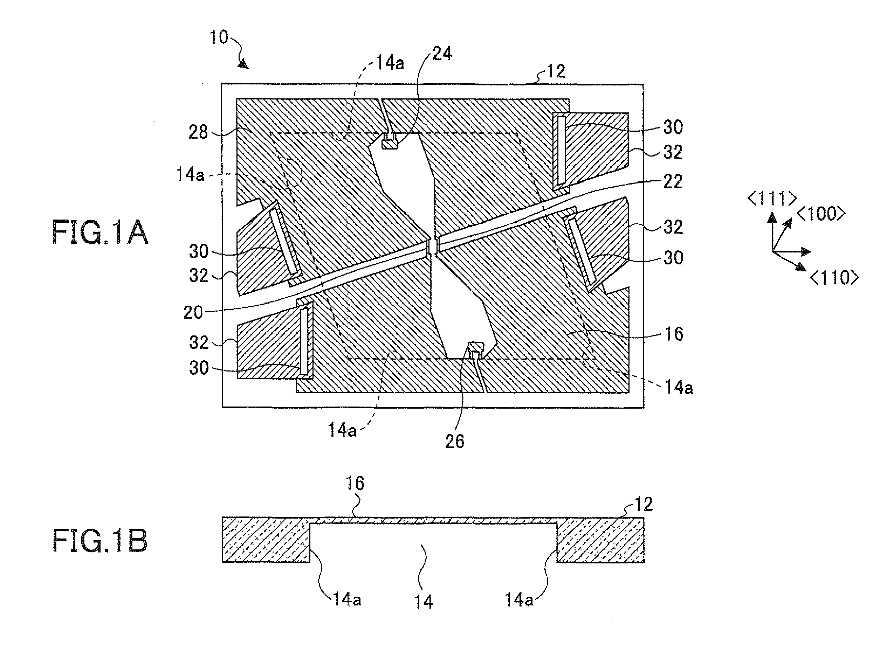

FIG. 1A is a top plan view of a semiconductor pressure sensor 10 according to a first embodiment of the present invention. FIG. 1B is a cross section of the semiconductor pressure sensor 10. The semiconductor pressure sensor 10 may be used in an automobile engine control system, an exhaust gas purifying system, a barometer and the like. The semiconductor pressure sensor 10 includes a single-crystal silicon (Si) substrate ("Si substrate") 12. The semiconductor pressure sensor 10 is manufactured by subjecting an Si substrate to various known semiconductor manufacturing processes.

The Si substrate 12 is a planar, rectangular member having a crystal orientation of a main upper surface in a (110) plane. Thus, there are two crystal axes <110> and <100> that are perpendicular to each other in the (110) plane of the Si substrate 12.

The Si substrate 12 includes an opening portion 14 formed in a main lower surface (back surface). The opening portion 14 is formed by anisotropically etching the Si substrate 12 such that the space of the opening portion 14 is enclosed by four diaphragm side walls 14a. The opening portion 14 in a plan view may have a parallelogram shape with two pairs of parallel and opposite sides. Preferably, the planar shape of the opening portion 14 may be a rhombus having the same length for its four sides. All of the four diaphragm side walls 14a are perpendicular to the (110) plane of the Si substrate 12; i.e., the diaphragm side walls 14a are in the (111) plane, whose normal is in the <111> direction.

The semiconductor pressure sensor 10 also includes a diaphragm 16 formed in the opening portion 14 on the main-surface side of the Si substrate 12. The diaphragm 16 is a thin member capable of flexing by an amount corresponding to a pressure difference of the front and back sides thereof. The planar shape of the diaphragm 16 may be a parallelogram enclosed by two pairs of parallel and opposite sides. Preferably, the planar shape of the diaphragm 16 may be a rhombus having the same length for its four sides. The diaphragm 16 may be formed when the opening portion 14 is formed by anisotropic etching of the Si substrate 12.

On the diaphragm 16, there are formed gauges 20, 22, 24, and 26 configured to detect and output detection signals indicating an extent of flexure of the diaphragm 16. The gauges 20, 22, 24, and 26 may be formed by injecting or diffusing ions into the main upper surface of the Si substrate 12. The gauges 20, 22, 24, and 26 may include strain gauge resistors (piezoresistive-effect elements) configured to detect changes in resistance from a reference value at the various locations of the gauges 20, 22, 24, and 26 on the diaphragm 16.

The gauges 20 and 22 are disposed at around the center (which may correspond to the center of gravity) of the diaphragm 16 in the plan view of FIG. 1A, where the diaphragm 16 may be compressed the most upon application of pressure to the semiconductor pressure sensor 10. Thus, the gauges 20 and 22 may be referred to as "center gauges". The gauges 24 and 26 are disposed at peripheral portions of the diaphragm 16 close to the diaphragm side walls 14a of the opening portion 14, where the diaphragm 16 may be pulled the most upon application of pressure to the semiconductor pressure sensor 10. Thus, the gauges 24 and 26 may be referred to as "side gauges". Preferably, the side gauges 24 and 26 may be disposed at the center of each corresponding side of the diaphragm 16. The center gauges (gauges 20 and 22) at around the center (which may correspond to the center of gravity) of the diaphragm 16 and the side gauges (gauges 24 and 26) at the periphery portions are configured to exhibit the change in resistance in opposite directions in response to the application of pressure. The gauges 20, 22, 24, and 26 are electrically connected in series via a diffusion lead conductor 28 which may be formed in the main upper surface of the Si substrate 12 by ion injection or diffusion. The gauges 20, 22, 24, and 26 form a Wheatstone bridge circuit that is a closed circuit of the gauges 20, 22, 24, and 26 connected in series by the diffusion lead conductor 28.

On the main-surface side of the Si substrate 12, there are formed contact holes 30 and electrodes 32 that are connected to the diffusion lead conductor 28. The contact holes 30 and the electrodes 32 are provided for electrically connecting the gauges 20, 22, 24, and 26 to an external detection unit configured to apply a voltage to the Wheatstone bridge circuit or receive the detection signals therefrom. The contact holes 30 and the electrodes 32 may be formed in or on an interlayer dielectric film, such as a Si oxide film, on the main-surface of the Si substrate 12 by deposition or the like of aluminum.

In the aforementioned Wheatstone bridge circuit, two of the four electrodes 32 that are not adjacent to each other are used as input electrodes and the remaining two electrodes are used as output electrodes. When a DC voltage is applied across the two input electrodes 32, the flexure of the diaphragm 16 appears as a change in the resistance values of the gauges 20, 22, 24, and 26. Thus, a voltage detection signal having a level corresponding to the detected pressure can be obtained across the two output electrodes 32.

In the semiconductor pressure sensor 10 with the above structure, a glass mount or the like may be bonded to the main lower surface (back surface) of the Si substrate 12 by anodic bonding or the like. After the bonding, the opening portion 14 may be evacuated to a predetermined pressure, such as vacuum, and then hermetically sealed so that the opening portion 14 can be used as a reference pressure chamber.

In such a structure of the semiconductor pressure sensor 10, when a pressure to be detected is applied to the main-surface side of the Si substrate 12, the diaphragm 16 is flexed by an amount corresponding to the applied pressure. At the same time, the resistance value of each of the gauges 20, 22, 24, and 26 changes due to the resultant stress, and each of the gauges 20, 22, 24, and 26 produces a voltage detection signal corresponding to the applied pressure. The voltage signals are sent via the output electrodes 32 to an external detection unit for signal processing in order to detect the amount of pressure applied.

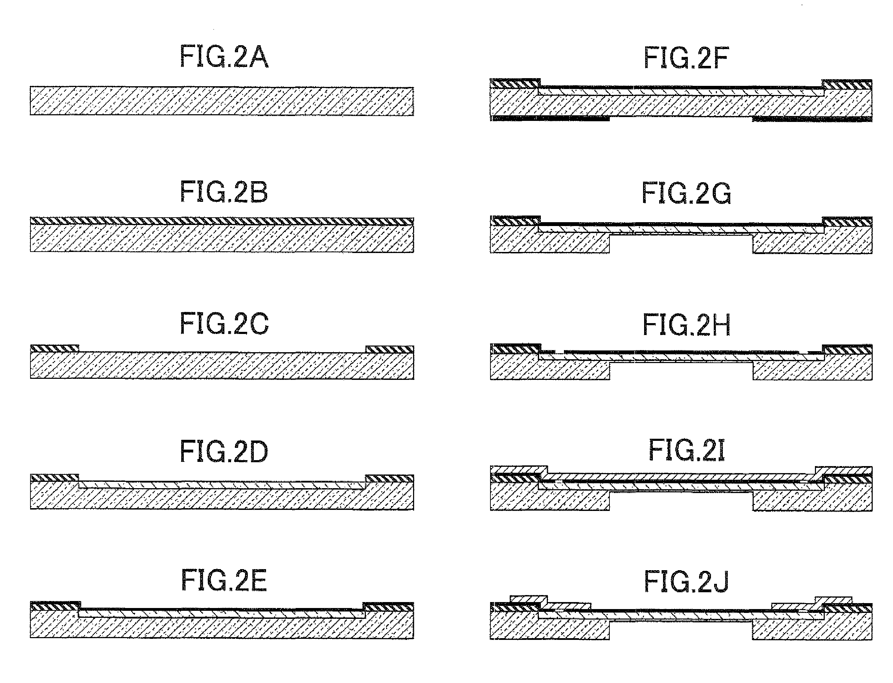

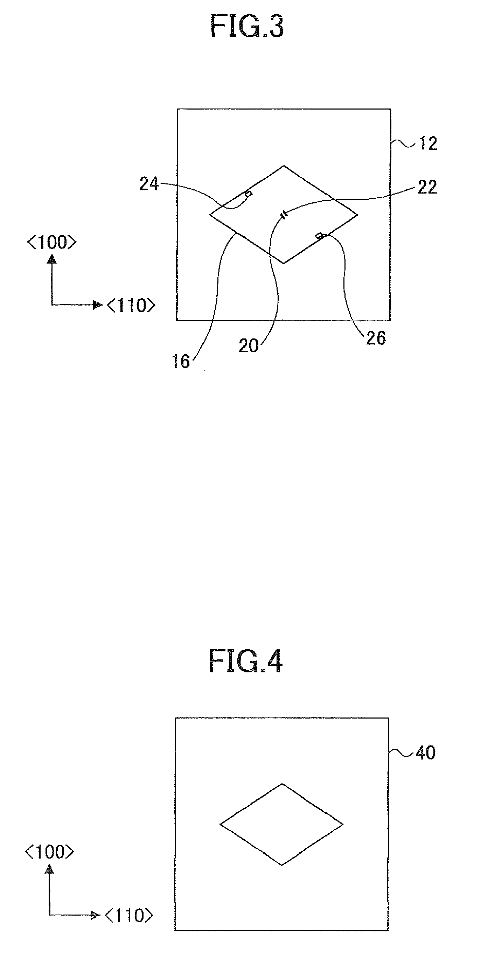

Referring to FIGs. 2 to 4, a method of manufacturing the semiconductor pressure sensor 10 according to the present embodiment is described. FIGs. 2A through 2J illustrate cross sections of the semiconductor pressure sensor 10 at various steps of the manufacturing method. FIG. 3 is a top plan view of the semiconductor pressure sensor 10 illustrating the arrangement of the gauges 20, 22, 24, and 26. FIG. 4 is a top plan view of a mask 40 used in the manufacturing method. The shape or the relative arrangement of the Si substrate 12 and the mask 40 or the diaphragm 16 illustrated in FIGs. 3 and 4 differ from that of FIG. 1. This is for the sake of convenience in describing the arrangement of the gauges and the mask according to the first embodiment. The structure of the semiconductor pressure sensor 10 according to the present embodiment may have the same structure as illustrated in FIG. 1. However, the semiconductor pressure sensor 10 according to other embodiments may have the configuration illustrated in FIG. 3 or 4 instead of FIG. 1.

In accordance with the present embodiment, the semiconductor pressure sensor 10 is manufactured in units of a plurality of chips, using a silicon wafer having a main upper surface in a (110) plane. In a first step, the silicon wafer is polished and washed to a mirror finish (FIG. 2A). On the main upper surface of the silicon wafer after washing, there is formed an oxide film (SiO₂) (FIG. 2B).

In the next step, a diffusion pattern is formed on the main upper surface of the silicon wafer by photolithography (FIG. 2C), and then the gauges 20, 22, 24, and 26 are formed by introduction of impurities by thermal diffusion, for example (FIG. 2D). In this step, the center gauges 20 and 22 are disposed near the center of the subsequently formed diaphragm 16, while the side gauges 24 and 26 are disposed at the peripheral portions of the subsequently formed diaphragm 16.

Thereafter, a protection film (SiO₂) is formed on the main upper surface of the silicon wafer (FIG. 2E). An etch pattern is then formed on a main lower surface (back surface) of the silicon wafer by photolithography (FIG. 2F). The substrate 12 is thereafter immersed in an alkaline solution to anisotropically etch the substrate back surface in order to form the diaphragm 16 (FIG. 2G).

The mask 40 used for forming the diaphragm 16 may be designed as illustrated in FIG. 4, where the mask 40 includes a parallelogram (particularly rhombic) shape whose sides are formed where the (110) plane of the silicon wafer intersects a (111) plane perpendicular to the (110) plane. Thus, when anisotropic etching is conducted by photolithography using such a mask design, the diaphragm 16 that is formed has a planar shape enclosed by four sides whose normal is in the <111> direction, i.e., two pairs of parallel and opposite sides. Because the (111) plane has large etch resistance, the diaphragm side walls 14a of the opening portion 14 do not extend beyond the mask design due to different etch rates in the crystal plane. Thus, all of the diaphragm side walls 14a of the opening portion 14 are in the (111) plane perpendicular to the substrate surface in the (110) plane, the normal to the (111) plane being in the <111> direction.

After the diaphragm 16 is formed, a contact hole pattern is formed on the main upper surface of the silicon wafer by photolithography, and then contact holes are formed in the main upper surface by etching (FIG. 2H). Aluminum (Al) is then deposited on the main upper surface of the silicon wafer (FIG. 2I), followed by the formation of a wiring pattern on the main upper surface of the silicon wafer by photolithography. Thereafter, the electrodes 32 are formed on the main upper surface by etching (FIG. 2J).

The silicon wafer with a plurality of the Si substrates 12 formed thereon is then cut into a plurality of rectangular chips for the individual Si substrates 12. Then, the semiconductor pressure sensors 10 are manufactured using the chips (Si substrates 12). Thus, in accordance with the present embodiment, the opening portion 14 whose diaphragm side walls 14a are all in the (111) plane is formed by photolithography and anisotropic etching using a mask design of a shape having lines that are formed where the (110) plane of the silicon wafer intersects the (111) plane perpendicular to the (110) plane. In other words, the diaphragm side walls 14a of the opening portion 14 are formed as two pairs of parallel and opposite surfaces whose normal is in the <111> direction.

Because all of the diaphragm side walls 14a of the opening portion 14 can be formed in planes perpendicular to the Si substrate 12, the sensor chip area can be reduced compared with the structure in which the diaphragm side walls of the opening portion 14 may be even partly tapered. Thus, in accordance with the present embodiment, the size of the semiconductor pressure sensor 10 can be greatly reduced, and the number of the Si substrates 12 that can be manufactured from a single silicon wafer can be increased. Thus, manufacturing cost can be reduced without decreasing the size of the diaphragm 16 formed in the opening portion 14. Therefore, the sensor chip area can be reduced without adversely affecting the pressure detecting performance of the pressure sensor 10.

When the aforementioned glass mount or the like is bonded to the main lower surface (bask surface) of the Si substrate 12, a greater margin (length) of the bonding area can be obtained on the main lower surface (back surface) side of the Si substrate 12 than the structure where the diaphragm side walls of the opening portion 14 may be even partly tapered. Thus, leakage from the opening portion 14 (reference pressure chamber) can be more reliably prevented and the opening portion 14 can be maintained at a high level of airtightness. In this case too, there is no need to decrease the size of the diaphragm 16 formed in the opening portion 14. Thus, in accordance with the present embodiment, airtightness of the opening portion 14 can be ensured without adversely affecting the pressure detecting performance of the semiconductor pressure sensor 10.

Furthermore, in accordance with the present embodiment, the peripheral portions of the diaphragm 16 can be flexed more uniformly in proportion to the pressure applied to the semiconductor pressure sensor 10, compared with the structure where the diaphragm side walls of the opening portion 14 may be even partly tapered. Thus, in accordance with the present embodiment, the semiconductor pressure sensor 10 has linear output characteristics in response to the application of pressure, thereby preventing sensitivity variations.

### Embodiment 2

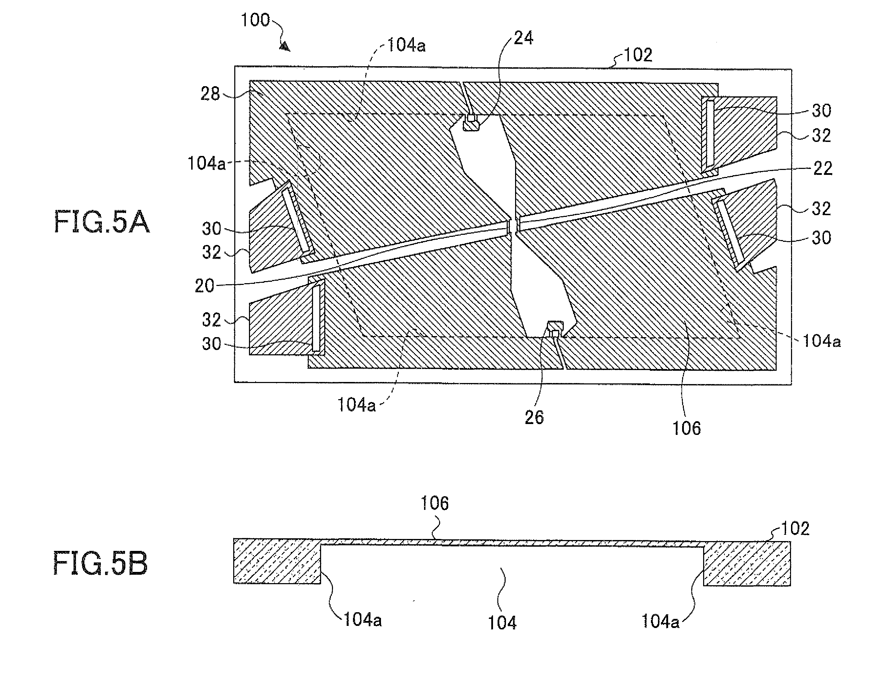

FIG. 5A is a top plan view of a semiconductor pressure sensor 100 according to a second embodiment of the present invention. FIG. 5B is a cross section of the semiconductor pressure sensor 100. Identical or similar elements or parts to those of Embodiment 1 illustrated in FIG. 1 are designated with similar reference numerals in FIG. 5 and their description is omitted. The semiconductor pressure sensor 100 may be used in an automobile engine control system, an exhaust gas purifying system, a barometer and the like, as in the case of the semiconductor pressure sensor 10 according to the first embodiment.

Referring to FIGs. 5A and 5B, the semiconductor pressure sensor 100 includes a Si substrate 102 having a crystal orientation of a main surface in the (110) plane. The Si substrate 102 is longer than the Si substrate 12 of the semiconductor pressure sensor 10 of the first embodiment in the length between one pair of the parallel and opposite sides. The Si substrate 102 has an opening portion 104 which concave in shape in a main lower surface (back surface) of the Si substrate 102. The semiconductor pressure sensor 100 also includes a diaphragm 106 on a main upper surface side. The shape of the opening portion 104 in a plan view is a parallelogram and not a rhombus, enclosed by the two pairs of parallel and opposite sides, the pairs having different lengths.

The opening portion 104 forms a space enclosed by four diaphragm side walls 104a. All of the four diaphragm side walls 104a are in a (111) plane perpendicular to the (110) plane of the Si substrate 102. On the diaphragm 106, there are disposed the gauges 20, 22, 24, and 26 configured to detect and output detection signals corresponding to an amount of flexure of the diaphragm 106. The gauges 20 and 22 are disposed at around the center (which may correspond to the center of gravity) of the diaphragm 106 in a plan view, where the pressure diaphragm 106 may be compressed the most upon application of pressure. Thus, the gauges 20 and 22 may be referred to as "center gauges". The gauges 24 and 26 are disposed at the peripheral portions (preferably at near the center of each longer side of the diaphragm 106) of the diaphragm 106 in a plan view, close to the diaphragm side walls 104a of the opening portion 104, where the diaphragm 106 may be pulled the most upon application of pressure. Thus, the gauges 24 and 26 may be referred to as "side gauges".

When a pressure is applied to the main upper surface side of the Si substrate 102 of the semiconductor pressure sensor 100, the diaphragm 106 is flexed by an amount corresponding to the amount of the applied pressure. In accordance with the second embodiment, the stress produced at the locations of the gauges 20, 22, 24, and 26 on the diaphragm 106 can be increased compared to the stress produced by the structure of the semiconductor pressure sensor 10 of the first embodiment. Thus, the semiconductor pressure sensor 100 can detect pressure with greater accuracy.

In the second embodiment, too, the opening portion 104 may be formed so that all of the diaphragm side walls 104a are in the (111) plane. Namely, the diaphragm side walls 104a of the opening portion 104 can be formed as two pairs of opposite and parallel surfaces whose normal is in the <111> direction. Thus, the semiconductor pressure sensor 100 of the second embodiment can provide effects similar to those of the semiconductor pressure sensor 10 of the first embodiment.

Although the exemplary embodiment of the invention has been described with a degree of particularity, it is the intent that the invention include all modifications and alterations from the disclosed design falling within the spirit or scope of the appended claims.

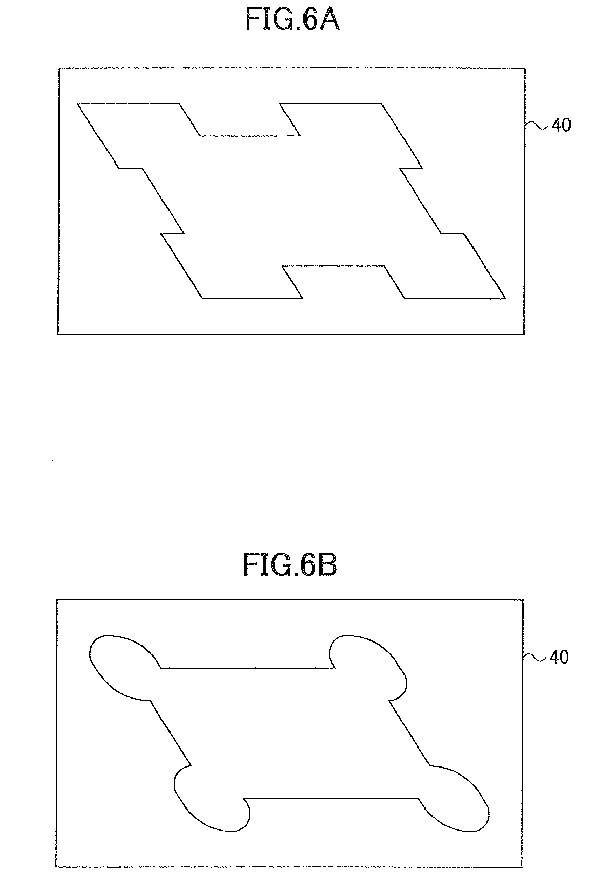

For example, while the mask 40 used for forming the diaphragm 16 or 106 of the foregoing embodiments has a parallelogram-shaped opening as illustrated in FIG. 4, the sides of the parallelogram being formed where the (110) plane of the silicon wafer intersects the (111) plane perpendicular to the (110) plane, the mask 40 may include various other shapes in other embodiments, such as illustrated in FIGs. 6A and 6B. The shapes of the opening in the mask 40 illustrated in FIGs. 6A and 6B are basically a parallelogram (or, preferably, a rhombus) formed by lines where the (110) plane of the silicon wafer intersects the (111) plane perpendicular to the (110) plane. The vertexes of the parallelogram (i.e., the vertexes of the parallelogram in which shape the opening portion 14 or 104 or the diaphragm 16 or 106 is to be formed) are extended outwardly in various desired ways with respect to the desired shape of the opening portion 14 or 104 or the diaphragm 16 or 106. FIG. 6A illustrates an example where the vertexes of the parallelogram are outwardly extended in angled shapes. FIG. 6B illustrates an example where the vertexes are outwardly extended in round shapes.

By using the mask design of such various shapes in photolithography or anisotropic etching, a planar shape of the diaphragm 16 or 106 can be obtained that is enclosed by two pairs of opposite and parallel sides whose normal is in the <111> direction. Thus, all of the diaphragm side walls 14a or 104a of the opening portion 14 or 104 are in the (111) plane while irregularities during etching at the edges where the individual sides or surfaces intersect one another can be eliminated, so that a desired shape of the diaphragm 16 or 106 or the opening portion 14 or 104 can be obtained. Thus, in accordance with such variations, decrease in pressure detecting performance of the semiconductor pressure sensor due to the irregularities during etching at the edges can be reduced, and pressure detection can be performed with increased accuracy.

In the semiconductor pressure sensor having such variations, too, the opening portion 14 or 104 can be formed such that all of the diaphragm side walls 14a or 104a are in the (111) plane. Namely, the diaphragm side walls 14a or 104a of the opening portion 14 or 104 can be formed as two pairs of opposite and parallel surfaces whose normal is in the <111> direction. Thus, effects similar to those of the semiconductor pressure sensor 10 or 100 of the first or second embodiment can be obtained.

### EXPLANATION OF SYMBOLS

- 10, 100: semiconductor pressure sensor
- 12, 102: silicon (Si) substrate
- 14, 104: opening portion
- 14a, 104a: diaphragm side wall
- 16, 106: diaphragm
- 20, 22, 24, 26: gauge

## Claims

1. A semiconductor pressure sensor comprising:
a single crystal silicon substrate;
a diaphragm formed in the single crystal silicon substrate by etching the single crystal silicon substrate from a back surface side thereof;
four diaphragm side walls enclosing the diaphragm; and
a bridge circuit formed on a surface of the single crystal silicon substrate, the bridge circuit including a lead conductor and a strain gauge resistor,
wherein the bridge circuit is configured to detect a pressure applied to the semiconductor pressure sensor based on a change in an output value of the bridge circuit that corresponds to an amount of flexure produced in the diaphragm by the pressure, and
wherein the diaphragm has a plane orientation in a (110) plane and a parallelogram in-plane shape, the four diaphragm side walls having a plane orientation in a (111) plane and forming two pairs of parallel and opposite surfaces.

2. The semiconductor pressure sensor according to claim 1, wherein the strain gauge resistor includes two center gauges disposed around the center of the diaphragm, and two side gauges each of which is disposed near the center of each of a pair of parallel and opposite sides of the diaphragm.

3. The semiconductor pressure sensor according to claim 2, wherein the strain gauge resistor includes a wiring pattern formed on the diaphragm in a direction perpendicular to the pair of parallel and opposite sides of the diaphragm.

4. The semiconductor pressure sensor according to any one of claims 1 through 3, wherein the pressure sensor is used as a detecting device configured to detect a pressure in an exhaust channel of an internal combustion engine through which exhaust gas passes.

5. The semiconductor pressure sensor according to claim 4, wherein the semiconductor pressure sensor is used as a detecting device configured to detect a pressure difference between an upstream side and a downstream side of a filter installed in the exhaust channel.

6. The semiconductor pressure sensor according to claim 5, wherein the semiconductor pressure sensor is used as a particulate matter detecting sensor configured to detect an amount of a particulate matter that accumulates in the filter, based on the pressure difference.

7. A method of manufacturing a semiconductor pressure sensor, comprising:
providing a single crystal silicon substrate having a plane orientation in the (110) plane;
forming a bridge circuit on a surface of the single crystal silicon substrate, the bridge circuit including a lead conductor and a strain gauge resistor and configured to detect an amount of pressure applied to the semiconductor pressure sensor based on a change in an output value of the bridge circuit that corresponds to an amount of flexure of a diaphragm due to the pressure; and
forming the diaphragm and four diaphragm side walls by etching the single crystal silicon substrate from a back surface side thereof, using a mask having an opening in the shape of a parallelogram whose sides are formed where the (110) plane of the single crystal silicon substrate intersects a (111) plane,
wherein the diaphragm has a plane orientation in the (110) plane and a parallelogram in-plane shape, the four diaphragm side walls having a plane or5.entation in the (111) plane and forming two pairs of parallel and opposite surfaces.

8. The method of manufacturing a semiconductor pressure sensor according to claim 7, wherein each of the vertexes of the parallelogram of the opening of the mask is extended outwardly.
